# EUROPEAN PATENT SPECIFICATION

(11) **EP 3 502 645 B1**
(45) Date of publication and mention of the grant of the patent: **21.10.2026**
(21) Application number: 18203116.1
(22) Date of filing: 29.10.2018
(51) Int. Cl.: G01M 5/00, G01N 27/20

(54) **FIBRE COMPOSITE COMPONENT AND MEASUREMENT ARRANGEMENT FOR MEASURING PROCESS AND STRUCTURE PARAMETERS OF A FIBRE COMPOSITE MATERIAL ALONG A MEASURING PATH**
FASERVERBUNDKOMPONENTE UND MESSANORDNUNG ZUR MESSUNG VON PROZESS- UND STRUKTURPARAMETERN EINES FASERVERBUNDWERKSTOFFS ENTLANG EINES MESSWEGS
COMPOSITE DE FIBRE COMPOSITE ET AGENCEMENT DE MESURE POUR MESURER LES PARAMÈTRES DE PROCESSUS ET DE STRUCTURE D'UN MATÉRIAU COMPOSITE FIBREUX LE LONG D'UN TRAJET DE MESURE

(30) Priority: 04.12.2017 DE 102017221821
(43) Date of publication of application: 26.06.2019
(73) Proprietor: Airbus Defence and Space GmbH, 82024 Taufkirchen (DE)
(72) Inventor: BUCHMANN, Christopher, 81377 München (DE); BECKER, Henning, 81543 München (DE); HESSE, Richard, 85640 Putzbrunn (DE); MEYER-GIESOW, Andreas, 85579 Neubiberg (DE); WEIMER, Christian, 81536 München (DE)
(74) Representative: Isarpatent

(56) References cited:
- EP-A1- 3 035 043
- DE-A1- 102006 022 363
- DE-A1- 102009 014 781
- DOMINAUSKAS ET AL: "Electric time-domain reflectometry distributed flow sensor", COMPOSITES PART A: APPLIED SCIENCE AND MANUFACTURING, ELSEVIER, AMSTERDAM, NL, vol. 38, no. 1, 25 November 2006 (2006-11-25), pages 138 - 146, XP005780513, ISSN: 1359-835X, DOI: 10.1016/J.COMPOSITESA.2006.01.019
- ANONYMOUS: "Twisted-Pair-Kabel", WIKIPEDIA, 27 November 2017 (2017-11-27), pages 1 - 16, XP055564633, Retrieved from the Internet <URL:https://de.wikipedia.org/wiki/Twisted-Pair-Kabel> [retrieved on 20190305]

## Description

The present invention relates to a fibre composite component and a measurement arrangement for measuring process and structure parameters of a fibre composite material along a measuring path.

Even though it is employable in various applications, the present invention and its underlying problem are explained in more detail in relation to fibre composite components for aircraft. However, the described methods and apparatus can likewise be used for general fibre composite components for very different applications.

Fibre composite materials, such as carbon fibre reinforced plastic (CFRP), for example, are increasingly used in modern aircraft construction. In order to guarantee a quality standard within the scope of the production of components made of such materials, it is advantageous to monitor process and structure parameters of the production method as accurately as possible, without this impacting the quality of the components and/or without this driving up the production costs. By way of example, important process and structure parameters comprise a degree of curing or a cross-linkage of a matrix material, a current position of the flow front of a liquefied matrix material, potential damage to a semi-finished product and/or a pre-mould, etc. A method for determining such properties in spatially resolved fashion, e.g., along a line-shaped sensor, in particular, is the electrical time-domain reflectometry (TDR); see, e.g., the article Buchmann et al., "Investigation of Electrical Time Domain Reflectometry for infusion and cure monitoring in combination with electrically conductive fibers and tooling materials," Composites Part B: Engineering, 94:389-398, 2016 (referred to below as Buchmann).

In general, TDR is a method for analysing run lengths and reflection characteristics of electromagnetic signals on transmission lines. TDR is based on the physical principle according to which an electromagnetic signal, e.g., a voltage pulse, is partly or completely reflected if the latter comes across regions in a medium that have different physical properties, for example changes in impedance along a transmission line. Specifically, one or more transmission lines in the aforementioned TDR method serve as line-shaped sensors at and/or in a fibre composite semi-finished product for the purposes of monitoring an infusion or injection process of a matrix material. Here, the introduced matrix material changes the dielectric properties along the transmission line, which in turn become noticeable as changes in the impedance of the line. If a voltage pulse is now fed into the line, it is possible to determine and analyse the reflection behaviour and, building thereon, it is possible to obtain spatially resolved and/or time-resolved deductions about the infusion process.

However, electrically conductive fibre and/or tool materials may lead to relevant loss effects, which in turn can impair the measurement. The use of shielded sensors is sometimes proposed for compensation purposes; by way of example, use can be made of a braided shield about a transmission line, see, for example, documents EP 3 035 041 A1, EP 3 035 042 A1 and EP 3 035 043 A1. However, this increases the cross section of the sensors, leading to restrictions in respect of possible applications since, inter alia, the sensors require a greater installation volume.

Against this background, the present invention is based on the object of finding improved solutions for monitoring process and structure parameters of fibre composite materials, said solutions being as space-saving as possible, simple and cost-effective.

According to the invention, this object is achieved by a fibre composite component having the features of Patent Claim 1 and a measurement arrangement having the features of Patent Claim 2.

Accordingly, provision is made of a fibre composite component comprising a fibre material; a matrix material, which surrounds the fibre material at least in regions; and an electrical sensor element that comprises at least two signal transmission lines that are twisted together and aligned in and/or at the fibre material in such a way that the signal transmission lines are surrounded at least in portions by the matrix material.

Further, a measurement arrangement is provided for measuring process and structure parameters of a fibre composite material along a measuring path. The measurement arrangement comprises the fibre composite component according to the invention, wherein the at least two signal transmission lines are further aligned along the measuring path in and/or at the fibre material, wherein the electrical sensor element is embodied to measure the process and structure parameters on the basis of the behaviour of electromagnetic signals that are fed into the signal transmission lines. The measurement arrangement further comprises an analysis device that is embodied to control the electrical sensor element, wherein the analysis device is embodied to measure the process and structure parameters with the electrical sensor element by way of time-domain reflectometry or time-domain transmissometry.

Further, the use of a measurement arrangement according to the invention for measuring process and structure parameters along a measuring path during the production of a fibre composite component is provided.

The concept underlying the present invention consists of using twisted lines or conductors as sensors. Twisted conductors, e.g., twisted pairs, offer improved protection against electric and magnetic disturbance fields when compared to conductors guided in parallel or ribbon cables or the like since the influences of said disturbance fields average out on account of the arrangement of the conductors that alternates portion-by-portion. For this reason, attenuation effects in the case of measurements in the presence of electrically conductive materials are significantly lower. This enables measurements with a greater accuracy and, moreover, the evaluation of longer sensor cables for monitoring larger regions. The substance to be monitored, e.g., an artificial resin, may completely surround the lines and consequently penetrate into the electric field around the conductors, leading to changes in the dielectric properties. This change (e.g. air vis-à-vis resin or liquid resin vis-à-vis cured resin) can be captured in spatially resolved fashion by analysing the reflection and/or transmission characteristics of the fed signals, for example by evaluating amplitude and/or a propagation time of the reflected voltage pulse. This leads to increased process control on account of a possible capture of a flow front and/or a degree of curing of a matrix material, for example. The reliability of products can be improved by timely identification of defects during operation, e.g. breaks or instances of delamination, which lead to cable breaks. The solution according to the invention requires no additional shielding and it is consequently implementable in space-saving and miniaturized manner; by way of example, use can be made of varnished copper wires with a very thin insulation. Moreover, this leads to a reduction in the influence of the sensor on the process or on the component. The sensors can be arranged at the fibre material, for example directly resting against the fibre material. Alternatively, the sensors may also be partly or completely integrated into the fibre material. In principle, the sensor may remain in the fibre composite component not only during the entire production process, including curing and completion. Moreover, the sensor can continue to be used in a targeted manner within the component during the later use, for example for monitoring the component or the like. Finally, a measurement system that is easy to handle (twisted lines can be laid without great outlay in a curved arrangement, too, for example) is provided at low cost and with small dimensions (e.g., a shielding is missing), said measurement system nevertheless ensuring efficient and precise monitoring of the process and structure parameters.

Advantageous configurations and developments emerge from the further dependent claims and from the description, with reference being made to the figures.

According to a development, provision can further be made of a matrix material introduction system. The matrix material introduction system can be embodied to impregnate the fibre material with the matrix material. The signal transmission lines can be aligned in such a way that the signal transmission lines are surrounded at least in portions by the matrix material when the matrix material is introduced.

According to a development, the signal transmission lines can rest against the fibre material. In principle, the signal transmission lines can rest directly against the fibre material without interposed, separating materials. However, provision is likewise made for separating material layers to be able to be situated between the signal transmission lines and the fibre material, via which material layers the signal transmission lines rest accordingly against the fibre material. By way of example, the fibre material may be covered by a peeled ply and/or a comparable separation means, which is removed again after the fibre material is cured to form a fibre composite component. Likewise, depending on the specifically employed production method, perforated sheets and/or flow aids or the like may be provided, for example, via which the signal transmission lines rest against the fibre material.

A moulding tool may be provided according to a development. The fibre material can rest on said moulding tool. Here, the signal transmission lines can be arranged between the moulding tool and the fibre material. By way of example, the signal transmission lines can rest against the fibre material.

A flow aid may be provided according to a development. The fibre material can rest on said flow aid. Here, the signal transmission lines can be arranged between the flow aid and the fibre material. By way of example, the signal transmission lines can rest against the fibre material. Here, the flow aid may serve, for example, to promote the transport of the matrix material, e.g. a resin. The flow aid can be embodied in such a way that the latter does not collapse under pressure either and thus creates an air- and/or liquid-permeable space between a vacuum construction or a vacuum film or the like and a mould or tool surface. This ensures that the fibre material is uniformly impregnated with matrix material. The flow aid can be removed directly after impregnating the fibre material, or else at a later stage after the impregnated fibre material is cured to form a fibre composite component.

According to a development, provision can be made of a vacuum construction. The vacuum construction can seal the measurement arrangement. The signal transmission lines can be arranged between the vacuum construction and the fibre material. By way of example, such a vacuum construction may comprise a vacuum film which covers the fibre material with separation means, signal transmission lines, flow aids, separating layers, etc., in an air-tight manner. At the edge and in interaction with a sealing tape, such a vacuum film can close off an air-tight space in relation to a moulding tool, wherein a matrix material introduction system is linked to the sealed space in order to facilitate an injection and/or infusion process by means of negative or positive pressure, with the aid of which a matrix material is introduced into the fibre material. Consequently, the electrical sensor element of the invention can be integrated or enclosed in a closed tool construction for the production of a fibre composite component. Consequently, the production process can be monitored, even if the actual construction is not directly optically visible.

The signal transmission lines can be arranged between the vacuum construction and a flow aid resting on the fibre material. In this development, the electrical sensor element is consequently not integrated into the fibre composite component and it does not rest directly against the fibre material or fibre composite component either. Instead, a flow aid is situated between the sensor element, i.e., the signal transmission lines, and the fibre material, said flow aid being removed again during the further course of the production method. Nevertheless, the introduced matrix material reaches the signal transmission lines through the flow aid, and so it is still possible to measure the properties of the matrix material, e.g., a degree of curing and/or a flow-front position.

According to a development, the signal transmission lines can be integrated into the fibre material. Unlike in case of using shielded signal transmission lines or electrical sensor elements, the present solution only uses up very little space and can be provided in a significantly miniaturized form. In this way, depending on the embodiment, the signal transmission lines or the electrical sensor element can be readily integrated into a fibre material and, ultimately, into a fibre composite component, without the structure thereof being significantly influenced. In principle, it is moreover even possible to integrate signal transmission lines into a fibre composite component in a targeted manner and to configure these in such a way that they continue to be usable during the intended use of the fibre composite component. In a specific example, the integrated signal transmission lines or the integrated electrical sensor element can be used to monitor the structure of the fibre composite component, for example. To this end, provision can be made for, e.g., the signal transmission lines to be reachable at the edge from outside of the fibre composite component such that an electrical connection to an external measurement or control device is possible. In an advantageous application, the signal transmission lines can be used to monitor an aircraft structure, for example to monitor structure components in a composite or partial composite construction, for example to determine damage or the like. By way of example, the signal transmission lines can be coupled to sensors, detectors, antennas and/or control devices. The signal transmission lines can be used as sensor elements on the one hand and purely as transmission lines on the other hand.

According to a development, the electrical sensor element can be embodied to measure the process and structure parameters in spatially resolved fashion along the signal transmission lines.

According to a development, the signal transmission lines can be aligned along a propagation direction of the matrix material in and/or at the fibre material.

According to a development, the signal transmission lines can be aligned along a substantially straight line in and/or at the fibre material. By way of example, the signal transmission lines can be arranged along a substantially straight, linear propagation direction. In the case of such a construction, it is consequently possible, for example, to easily and efficiently reconstruct or monitor the flow front of the matrix material in a spatially resolved manner.

According to a development, the signal transmission lines can be aligned in meandering fashion in and/or at the fibre composite semi-finished product. In this development, the signal transmission lines can be consequently arranged in areal fashion; i.e., the measuring path can more or less completely cover an area. In this development, it is possible to obtain a more or less complete picture about the properties of the introduced matrix material over an area.

According to a development, the process and structure parameters can be selected from the group of a degree of curing or degree of cross-linkage of the matrix material, a flow-front position of the matrix material, defects of the fibre material or the matrix material and damage to the fibre material or the matrix material.

According to a development, the electrical sensor element can comprise at least three signal transmission lines that are twisted together. In particular, the electrical sensor element can comprise exactly three signal transmission lines that are twisted together. However, in principle, four, five or more twisted signal transmission lines are also provided. The additional signal transmission lines can be used for different purposes. By way of example, a third signal transmission line can act as a redundant line, by means of which a measurement continues to be possible should one of the lines fail, e.g., in the case of a cable break or the like.

According to a development, the signal transmission lines can be embodied as insulated single wires. By way of example, the signal transmission lines can be embodied as insulated metal wires, e.g. varnished copper wires, i.e., copper wires with an insulating layer of varnish.

According to a development, a plurality of electrical sensor elements can be provided. Consequently, provision is made, in principle, for a plurality of sensor elements to be integrated in a measurement arrangement, i.e., a construction for producing a fibre composite component. By way of example, a plurality of line-shaped sensor elements can be provided, it being possible for said sensor elements to be aligned in different directions. As an alternative or in addition thereto, provision can be made of a plurality of line-shaped sensor elements, which are placed in different layers in a layer construction or vacuum construction; by way of example, a sensor element (or the signal transmission line thereof) can rest directly against a fibre material or be integrated into the latter, while a further sensor element is situated between a vacuum film and a flow aid. Consequently, a sensor element, for example, may remain in the fibre composite component even after curing, while a further sensor element only serves to monitor the production and it is subsequently removed again. In a further example, a sensor element can be embodied with meandering signal transmission lines, while the signal transmission lines of a further sensor element have a straight-lined arrangement.

According to the invention, provision is made of an analysis device. The analysis device is embodied to control the electrical sensor element. The analysis device is embodied to measure the process and structure parameters with the electrical sensor element by way of time-domain reflectometry or electrical time-domain reflectometry (TDR or E-TDR), or time-domain transmissometry or electrical time-domain transmissometry (TDT or E-TDT) or the like. While the reflection behaviour of signal pulses is examined during TDR or E-TDR, TDT or E-TDT considers the transmission behaviour of electromagnetic pulses or waves. Likewise, further and/or more specific methods that are known to a person skilled in the art are employable or usable, such as, e.g., spread-spectrum time-domain reflectometry (SSTDR) or the like.

To the extent that this is expedient, the aforementioned configurations and developments can be combined with one another as desired. Further possible configurations, developments and implementations of the invention also comprise combinations of features of the invention described above or below in respect of the exemplary embodiments, even if said combinations have not been explicitly mentioned. In particular, a person skilled in the art will, in this case, also add individual aspects to the respective basic form of the present invention in order to improve or complement the latter.

The present invention will be explained in more detail below on the basis of the exemplary embodiments schematically specified in the figures. In the figures:
- Fig. 1: shows a schematic perspective view of a measurement arrangement according to an embodiment of the invention;
- Fig. 2: shows a schematic view of an electrical sensor element from the measurement arrangement in Figure 1;
- Fig. 3: shows a schematic illustration of the use of the measurement arrangement of Figure 1; and
- Fig. 4: shows a schematic perspective view of a fibre composite component with the electrical sensor element of Figure 2.

The attached figures should impart further understanding of the embodiments of the invention. They elucidate embodiments and serve in conjunction with the description to explain principles and concepts of the invention. Other embodiments and many of the aforementioned advantages arise in view of the drawings. The elements in the drawings have not necessarily been shown true to scale in relation to one another.

In the figures of the drawing, elements, features and components that are the same, have the same function and have the same effect are provided with the same reference sign in each case - provided nothing else is stated.

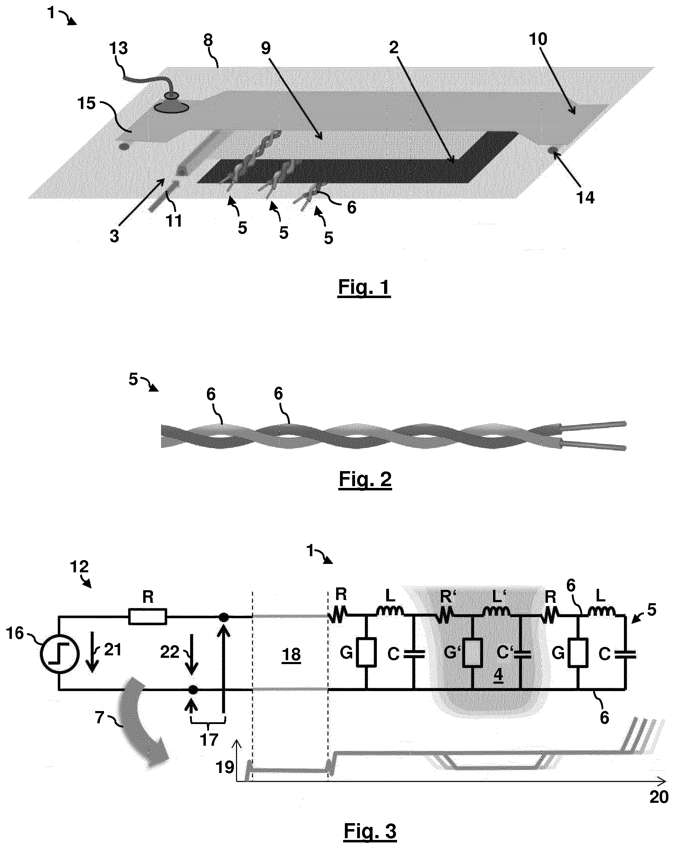

Figure 1 shows a schematic perspective view of a measurement arrangement 1 according to the embodiment of the invention.

During the production of a fibre composite component, the measurement arrangement 1 serves to measure process and structure parameters along a measuring path. The fibre composite component to be produced can be, for example, a component of an aircraft or spacecraft, e.g., a structure component of a passenger aircraft such as a frame, stringer, etc., or panelling for a passenger cabin or the like. For the purpose of producing the fibre composite component, the fibre material 2, in particular a fibre semi-finished product, is impregnated with a matrix material 4 and subsequently cured under the application of pressure and/or temperature.

To this end, the measurement arrangement 1 comprises a fibre material 2. By way of example, the fibre material 2 can be a fibre scrim, a pre-mould or a corresponding arrangement of reinforcement fibres, which, moreover, may be pre-impregnated. The fibre material 2 is arranged on or in a moulding tool 8. By way of example, the fibre material 2 may comprise carbon fibres, glass fibres and/or aramid fibres or the like. Further, the measurement arrangement 1 comprises a matrix material introduction system 3. The matrix material introduction system 3 is embodied to impregnate the fibre material 2 with a matrix material 4 (see Figure 3) for the purposes of forming the fibre composite component. By way of example, the matrix material 4 can be a fusible, liquefiable or flowable plastic, for example an artificial resin or the like. However, in principle, the fibre material also may be pre-impregnated with the matrix material as an alternative or in addition thereto. Accordingly, the matrix material introduction system 3 can be a resin supply, which comprises e.g. a sprue channel or the like, by means of which a resin can be introduced in a propagation direction 11. Here, use can be made of an infusion or injection method, for example; i.e., negative pressure or positive pressure on the resin side is exploited to bring the resin into the fibre material 2. The fibre material 2 is covered by a flow aid 9, which in turn is situated under a vacuum film 15 of a vacuum construction 10. Moreover, the vacuum construction 10 comprises a sealing band 14, by means of which the moulding tool 8 with the fibre material 2 is sealed against the vacuum film 15. The measurement arrangement 1, i.e., specifically, the enclosed space between vacuum film 15 and moulding tool 8, can be evacuated by way of a vacuum connector 13.

Further, in an exemplary manner, the measurement arrangement 1 comprises three electrical sensor elements 5, which are arranged differently. Each sensor element 5 has two signal transmission lines 6 that are twisted together and aligned in a straight line along the propagation direction 11 of the matrix material 4 in each case. In this respect, Figure 2 shows one of the sensor elements 5 in an exemplary manner. The signal transmission lines 6 are embodied as electrically insulated single wires, e.g. varnished copper wires. Compared to conductors guided in parallel or ribbon cables or the like, twisted conductors provide better protection against electric and magnetic disturbance fields since the influences thereof average out on account of the arrangement of the conductors that alternates portion-by-portion. Consequently, twisted signal transmission lines 6 are ideally suited in conjunction with electrically conductive fibre and/or tool materials, which would lead to disturbance or loss effects in the case of simple lines.

Along the longitudinal extent, the signal transmission lines 6 form a measuring path along the fibre material 2, wherein the signal transmission lines 6 are aligned or arranged in such a way that the signal transmission lines 6 are surrounded at least in portions by the matrix material 4 when the matrix material 4 is introduced. To this end, the sensor elements 5 are placed in three different arrangements in an exemplary fashion. With the signal transmission lines 6 thereof, one sensor element 5 is arranged between the moulding tool 8 and the fibre material 2, resting against the fibre material 2. With its signal transmission lines 6, a further sensor element 5 is arranged between the flow aid 9 and the fibre material 2, resting against the fibre material 2. With its signal transmission lines 6, the third sensor element 5 is situated between the vacuum film 15 and the flow aid 9. All three sensor elements 5 are arranged in such a way that the signal transmission lines 6 are successively surrounded by introduced matrix material 4 or said matrix material flows therearound. As a result, there is a change in the dielectric properties around the signal transmission lines 6, which in turn has an effect on the impedance of the signal transmission lines 6. Consequently, the impedance ultimately is a function of the location along the respective signal transmission line 6. In the present embodiment, this property is exploited to determine the behaviour of process and structure parameters, in particular of properties of the matrix material 4 along the measuring path, i.e., along the signal transmission lines 6. Possible measurable process and structure parameters in this case comprise a degree of curing of the matrix material 4, a flow-front position of the matrix material 4, defects of the fibre material 2, damage to the fibre material 2, etc.

To this end, the electrical sensor element 5 is embodied to measure the process and structure parameters on the basis of the behaviour of electromagnetic signals 7, said signals being fed into the signal transmission lines 6. This will be explained in more detail with reference to Figure 3, which shows a schematic illustration of the use of the measurement arrangement 1 from Figure 1.

The measurement arrangement 1 comprises an analysis device 12 that is embodied to control the electrical sensor element 5. In the specific embodiment in Figure 3, the analysis device 12 is embodied to measure the process and structure parameters, in particular the degree of curing and/or the flow-front position of the matrix material 4 by way of TDR using the electrical sensor element 5.

To this end, the analysis device 12 comprises a pulse generator 16, which is coupled to the signal transmission lines 6 by way of a coaxial cable 18. Figure 3 shows the equivalent circuit diagram of the electrical sensor element 5 with the inductance per unit length L, L', capacitance per unit length C, C', resistance per unit length R, R' and leakance per unit length G, G', related to the line length. The quantities per unit length depend on the dielectric properties of the surroundings of the signal transmission lines 6. In regions in which the signal transmission lines 6 are surrounded by matrix material 4, the quantities per unit length have different values than in regions without matrix material 4 (see the filled-in area in Figure 3). Likewise, these quantities depend on the degree of curing or degree of cross-linkage of the matrix material 4 (see different greyscale shadowing of the matrix material 4 in Figure 3, which indicate different degrees of curing). The pulse generator 16 is embodied to feed a voltage pulse with a specific input voltage 21 into the signal transmission lines 6. This voltage pulse is reflected in the signal transmission lines 6 and subsequently detected and evaluated over time, as an output voltage 22, as an electromagnetic signal 7 by an oscilloscope 17. By way of example, the impedance 19 of the signal transmission lines 6 is plotted schematically as a function of the propagation time 20 bottom right in Figure 3. What is indicated schematically here is that the impedance depends both on discontinuities (e.g., from the coaxial cable, the end of the signal transmission lines 6, etc.) and on the presence of a more or less cured matrix material 4. By analysing the impedance or, in general, the behaviour of the electromagnetic signal 7, it is possible to deduce the process and structure parameters, in particular the degree of curing and the flow-front position, of the matrix material 4 as a function of location and time. In respect of a detailed explanation of a corresponding measurement method with the aid of TDR, reference is made here to the article by Buchmann. The measurement can be "single-ended", i.e., only one signal transmission line 6 of the sensor element 5 has a voltage applied thereto, while the other signal transmission line 6 serves as earth. So-called differential TDR can be used to further improve the signal-to-noise ratio. Here, the two signal transmission lines 6 of the sensor element 5 have applied thereto signals of opposite polarity. In the case of an unchanging differential signal amplitude, reflections at interference sites along the signal transmission line 6 can be reduced and hence the measurement quality can be further increased (see the article by Buchmann).

The fibre material 2 can be examined for defects even before the introduction of the matrix material 4. Should the fibre material 2 subsequently be impregnated with the matrix material 4, the not yet cured fibre material 2 can be examined anew for defects, without the production being interrupted. If the impregnated fibre material 2 meets the quality requirements to this point, the matrix material 4 is cured. The degree of curing of the matrix material 4 can be detected with the apparatuses and methods described herein, both during curing and within the scope of a final check. Consequently, virtually seamless monitoring of a production process of fibre composite components is possible.

The present embodiment provides a space-saving, simple and cost-effective solution for monitoring process parameters, with the aid of which both the degree of curing and the flow-front position of a matrix material are continuously able to be monitored, and the reliability of products can be ensured by way of a timely detection of defects, e.g., breaks or instances of delamination. The presented solution requires no additional shielding and it is consequently implementable in a space-saving and miniaturized manner. This leads to the influence of the sensor on the process or on the component being reduced, said sensor even being able to readily remain in the fibre composite component. As a result of twisting the lines, the sensor element is comparatively insensitive to external influences, such as, for instance, metallic tools or conducting fibres. Consequently, the precision and/or quality of the measurement can be improved, particularly in comparison with conventional two-wire sensors. Overall, a cost-effective and miniaturizable measurement system that is easy to handle is provided, said measurement system nevertheless ensuring efficient and precise monitoring of the process and structure parameters.

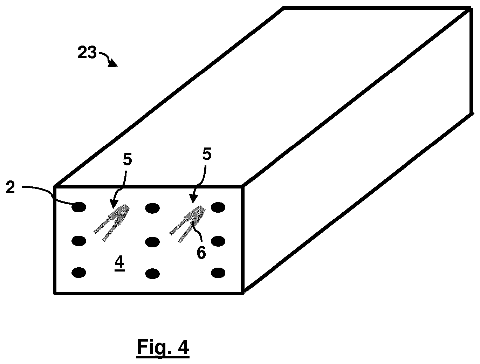

The electrical sensor elements 5 or signal transmission lines 6 are able not only to merely rest against a fibre material 2 or be arranged in the vicinity thereof. Additionally, provision is made for electrical sensor elements 5 or signal transmission lines 6 to be integrated into fibre material 2. In particular, these components may also remain in the fibre material 2 in order to be used for certain purposes, e.g., for monitoring the structure of the fibre composite component 23 or the like, during the actual application of an already produced fibre composite component 23, as is illustrated in Figure 4 in an exemplary manner. Figure 4 shows a fibre composite component 23 with fibre material 2 (reinforcing fibres) and matrix material 4, with a plurality of sensor elements 5 with two twisted signal transmission lines 6 in each case being arranged in the component in such a way that the ends of the signal transmission lines 6 protrude from the fibre composite component 23. As a result, there can be an electrical connection to an external measurement or control device (not plotted here), which can use the signal transmission lines 6 for monitoring the fibre composite component 23, for example in order to determine damage such as breaks or instances of delamination or the like. By way of example, the signal transmission lines 6 can be coupled to sensors, detectors, antennas and/or control devices. The signal transmission lines 6 can be used as sensor elements, on the one hand, and purely as transmission lines, on the other hand.

In the preceding detailed description, various features have been combined in one or more examples in order to improve the stringency of the illustration. However, it should be clear in this case that the above description is purely of illustrative nature and, however, by no means of restrictive nature. It serves to cover all alternatives, modifications and equivalents of the various features and exemplary embodiments. In view of the description above, many other examples will be immediately and directly clear to a person skilled in the art on account of his specialist knowledge.

By way of example, the signal transmission lines 6 can be arranged or aligned in meandering fashion. In this way, not only is it possible to evaluate the process and structure parameters in one dimension along a straight line but also, advantageously, a planar spatial resolution is achieved with a single sensor element 5. Likewise, it is possible to align a plurality of electrical sensor elements 5 in a straight line in different directions in order thus to achieve a multi-dimensional sensitivity of the measurement arrangement 1.

In a further example, the electrical sensor elements 5 may comprise three or more signal transmission lines 6 that are twisted together. The additional signal transmission lines 6 may serve, for example, for redundancy purposes in order to be able to compensate failures of individual signal transmission lines 6.

The exemplary embodiments were selected and described in order to be able to present the principles underlying the invention and the application possibilities thereof in practice to the best possible extent. As a result, persons skilled in the art can ideally modify and use the invention and its various exemplary embodiments in relation to the intended use. In the claims and the description, the terms "containing" and "having" are used as neutral concepts for the corresponding term "comprising". Furthermore, a use of the terms "a", "an" and "one" is not intended to fundamentally exclude a plurality of such features and components described.

### List of reference signs

- 1: Measurement arrangement
- 2: Fibre material
- 3: Matrix material introduction system
- 4: Matrix material
- 5: Electrical sensor element
- 6: Signal transmission lines
- 7: Electromagnetic signal
- 8: Moulding tool
- 9: Flow aid
- 10: Vacuum construction
- 11: Propagation direction
- 12: Analysis device
- 13: Vacuum connector
- 14: Sealing band
- 15: Vacuum film
- 16: Pulse generator
- 17: Oscilloscope
- 18: Coaxial cable
- 19: Impedance
- 20: Propagation time
- 21: Input voltage
- 22: Output voltage
- 23: Fibre composite component
- R, R': Resistance per unit length
- C, C': Capacitance per unit length
- L, L': Inductance per unit length
- G, G': Leakance per unit length

## Claims

1. Fibre composite component (23) comprising:
a fibre material (2);
a matrix material (4), which surrounds the fibre material (2) at least in regions; and
an electrical sensor element (5) that comprises at least two signal transmission lines (6) that are twisted together and aligned in and/or at the fibre material (2) in such a way that the signal transmission lines (6) are surrounded at least in portions by the matrix material (4).

2. Measurement arrangement (1) for measuring process and structure parameters of a fibre composite material along a measuring path, comprising:
the fibre composite component (23) according to claim 1, wherein the at least two signal transmission lines (6) are further aligned along the measuring path in and/or at the fibre material (2), wherein the electrical sensor element (5) is embodied to measure the process and structure parameters on the basis of the behaviour of electromagnetic signals (7) that are fed into the signal transmission lines (6); and
an analysis device (12) that is embodied to control the electrical sensor element (5), wherein the analysis device (12) is embodied to measure the process and structure parameters with the electrical sensor element (5) by way of time-domain reflectometry or time-domain transmissometry.

3. Measurement arrangement (1) according to Claim 2, furthermore comprising a matrix material introduction system (3), which is embodied to impregnate the fibre material (2) with the matrix material (4), wherein the signal transmission lines (6) are aligned in such a way that the signal transmission lines (6) are surrounded at least in portions by the matrix material (4) when the matrix material is introduced.

4. Measurement arrangement (1) according to Claim 2 or 3, wherein the signal transmission lines (6) rest against the fibre material (2).

5. Measurement arrangement (1) according to any one of Claims 2 to 4, furthermore comprising a moulding tool (8), on which the fibre material (2) rests, wherein the signal transmission lines (6) are arranged between the moulding tool (8) and the fibre material (2).

6. Measurement arrangement (1) according to any one of Claims 2 to 4, furthermore comprising a flow aid (9), on which the fibre material (2) rests, wherein the signal transmission lines (6) are arranged between the flow aid (9) and the fibre material (2).

7. Measurement arrangement (1) according to any one of Claims 2 to 4, furthermore comprising a vacuum construction (10), which seals the measurement arrangement (1), wherein the signal transmission lines (6) are arranged between the vacuum construction (10) and the fibre material (2).

8. Measurement arrangement (1) according to Claim 7, wherein the signal transmission lines (6) are arranged between the vacuum construction (10) and a flow aid (9) resting on the fibre material (2).

9. Measurement arrangement (1) according to Claim 2 or 3, wherein the signal transmission lines (6) are integrated into the fibre material (2).

10. Measurement arrangement (1) according to any one of Claims 2 to 9, wherein the signal transmission lines (6) are aligned along a propagation direction (11) of the matrix material (4).

11. Measurement arrangement (1) according to any one of Claims 2 to 10, wherein the signal transmission lines (6) are aligned along a substantially straight line.

12. Measurement arrangement (1) according to any one of Claims 2 to 9, wherein the signal transmission lines (6) are aligned in meandering fashion.

13. Measurement arrangement (1) according to any one of Claims 2 to 12, wherein the process and structure parameters are selected from the group of a degree of curing of the matrix material (4), a flow-front position of the matrix material (4), defects of the fibre material (2) or the matrix material (4) and damage to the fibre material (2) or the matrix material (4).

14. Measurement arrangement (1) according to any one of Claims 2 to 13, wherein the electrical sensor element (5) comprises at least three signal transmission lines (6) that are twisted together.

15. Measurement arrangement (1) according to any one of Claims 2 to 14, wherein the signal transmission lines (6) are embodied as insulated single wires.

16. Measurement arrangement (1) according to any one of Claims 2 to 15, wherein a plurality of electrical sensor elements (5) are provided.

17. Use of the measurement arrangement (1) according to any one of Claims 2 to 16 for measuring process and structure parameters along a measuring path during the production of a fibre composite component (23) and/or in a produced fibre composite component (23).

## Patentansprüche

1. Faserverbundbauteil (23) umfassend:
ein Fasermaterial (2);
ein Matrixmaterial (4), dass das Fasermaterial (2) zumindest bereichsweise umgibt; und
ein elektrisches Sensorelement (5), das mindestens zwei Signalübertragungsleitungen (6) umfasst, die miteinander verdrillt und in und/oder an dem Fasermaterial (2) derart ausgerichtet sind, dass die Signalübertragungsleitungen (6) zumindest abschnittsweise von dem Matrixmaterial (4) umgeben sind.

2. Messanordnung (1) zum Messen von Prozess- und Strukturparametern eines Faserverbundmaterials entlang einer Messstrecke, umfassend:
das Faserverbundbauteil (23) nach Anspruch 1, wobei die mindestens zwei Signalübertragungsleitungen (6) ferner entlang der Messstrecke in und/oder an dem Fasermaterial (2) ausgerichtet sind, wobei das elektrische Sensorelement (5) dazu ausgebildet ist, die Prozess- und Strukturparameter anhand des Verhaltens von elektromagnetischen Signalen (7) zu messen, die in die Signalübertragungsleitungen (6) eingespeist werden; und
eine Analysevorrichtung (12), die dazu ausgebildet ist, das elektrische Sensorelement (5) zu steuern, wobei die Analysevorrichtung (12) dazu ausgebildet ist, die Prozess- und Strukturparameter mit dem elektrischen Sensorelement (5) mittels Zeitbereichsreflektometrie oder Zeitbereichstransmissometrie zu messen.

3. Messanordnung (1) nach Anspruch 2, ferner umfassend ein Matrixmaterialeinleitungssystem (3), das dazu ausgebildet ist, das Fasermaterial (2) mit dem Matrixmaterial (4) zu tränken, wobei die Signalübertragungsleitungen (6) derart ausgerichtet sind, dass die Signalübertragungsleitungen (6) bei Einleitung des Matrixmaterials zumindest abschnittsweise von dem Matrixmaterial (4) umgeben sind.

4. Messanordnung (1) nach Anspruch 2 oder 3, wobei die Signalübertragungsleitungen (6) an dem Fasermaterial (2) anliegen.

5. Messanordnung (1) nach einem der Ansprüche 2 bis 4, ferner umfassend ein Formwerkzeug (8), auf dem das Fasermaterial (2) aufliegt, wobei die Signalübertragungsleitungen (6) zwischen dem Formwerkzeug (8) und dem Fasermaterial (2) angeordnet sind.

6. Messanordnung (1) nach einem der Ansprüche 2 bis 4, ferner umfassend eine Fließhilfe (9), auf der das Fasermaterial (2) aufliegt, wobei die Signalübertragungsleitungen (6) zwischen der Fließhilfe (9) und dem Fasermaterial (2) angeordnet sind.

7. Messanordnung (1) nach einem der Ansprüche 2 bis 4, ferner umfassend einen Vakuumaufbau (10), der die Messanordnung (1) abdichtet, wobei die Signalübertragungsleitungen (6) zwischen dem Vakuumaufbau (10) und dem Fasermaterial (2) angeordnet sind.

8. Messanordnung (1) nach Anspruch 7, wobei die Signalübertragungsleitungen (6) zwischen dem Vakuumaufbau (10) und einer auf dem Fasermaterial (2) aufliegenden Fließhilfe (9) angeordnet sind.

9. Messanordnung (1) nach Anspruch 2 oder 3, wobei die Signalübertragungsleitungen (6) in das Fasermaterial (2) integriert sind.

10. Messanordnung (1) nach einem der Ansprüche 2 bis 9, wobei die Signalübertragungsleitungen (6) entlang einer Ausbreitungsrichtung (11) des Matrixmaterials (4) ausgerichtet sind.

11. Messanordnung (1) nach einem der Ansprüche 2 bis 10, wobei die Signalübertragungsleitungen (6) entlang einer im Wesentlichen geraden Linie ausgerichtet sind.

12. Messanordnung (1) nach einem der Ansprüche 2 bis 9, wobei die Signalübertragungsleitungen (6) mäanderförmig ausgerichtet sind.

13. Messanordnung (1) nach einem der Ansprüche 2 bis 12, wobei die Prozess- und Strukturparameter ausgewählt sind aus der Gruppe aus einem Aushärtegrad des Matrixmaterials (4), einer Fließfrontposition des Matrixmaterials (4), Fehlstellen des Fasermaterials (2) oder des Matrixmaterials (4) und einer Beschädigung des Fasermaterials (2) oder des Matrixmaterials (4).

14. Messanordnung (1) nach einem der Ansprüche 2 bis 13, wobei das elektrische Sensorelement (5) mindestens drei miteinander verdrillte Signalübertragungsleitungen (6) umfasst.

15. Messanordnung (1) nach einem der Ansprüche 2 bis 14, wobei die Signalübertragungsleitungen (6) als isolierte Einzeldrähte ausgebildet sind.

16. Messanordnung (1) nach einem der Ansprüche 2 bis 15, wobei mehrere elektrische Sensorelemente (5) bereitgestellt sind.

17. Verwendung der Messanordnung (1) nach einem der Ansprüche 2 bis 16 zum Messen von Prozess- und Strukturparametern entlang einer Messstrecke während der Herstellung eines Faserverbundbauteils (23) und/oder in einem hergestellten Faserverbundbauteil (23).

## Revendications

1. Composant composite fibreux (23) comprenant :
un matériau fibreux (2) ;
un matériau matriciel (4) qui entoure le matériau fibreux (2) au moins par zones ; et
un élément capteur électrique (5) qui comprend au moins deux lignes de transmission de signaux (6) torsadées ensemble et alignées dans et/ou au niveau du matériau fibreux (2) de telle sorte que les lignes de transmission de signaux (6) soient entourées au moins par parties par le matériau matriciel (4).

2. Agencement de mesure (1) pour la mesure de paramètres de procédé et de structure d'un matériau composite fibreux le long d'un trajet de mesure, comprenant :
le composant composite fibreux (23) selon la revendication 1, dans lequel les au moins deux lignes de transmission de signaux (6) sont en outre alignées le long du trajet de mesure dans et/ou au niveau du matériau fibreux (2), l'élément capteur électrique (5) étant conçu pour mesurer les paramètres de processus et de structure sur la base du comportement de signaux électromagnétiques (7) qui sont introduits dans les lignes de transmission de signaux (6) ; et
un dispositif d'analyse (12) conçu pour commander l'élément capteur électrique (5), le dispositif d'analyse (12) étant conçu pour mesurer les paramètres de processus et de structure avec l'élément capteur électrique (5) par réflectométrie dans le domaine temporel ou par transmissométrie dans le domaine temporel.

3. Agencement de mesure (1) selon la revendication 2, comprenant en outre un système d'introduction de matériau matriciel (3) qui est conçu pour imprégner le matériau fibreux (2) avec le matériau matriciel (4), où les lignes de transmission de signaux (6) sont alignées de telle sorte que les lignes de transmission de signaux (6) soient entourées au moins partiellement par le matériau matriciel (4) lors de l'introduction du matériau matriciel.

4. Agencement de mesure (1) selon la revendication 2 ou la revendication 3, dans lequel les lignes de transmission de signaux (6) reposent contre le matériau fibreux (2).

5. Agencement de mesure (1) selon l'une quelconque des revendications 2 à 4, comprenant en outre un outil de moulage (8) sur lequel repose le matériau fibreux (2), les lignes de transmission de signaux (6) étant disposées entre l'outil de moulage (8) et le matériau fibreux (2).

6. Agencement de mesure (1) selon l'une quelconque des revendications 2 à 4, comprenant en outre un auxiliaire d'écoulement (9) sur lequel repose le matériau fibreux (2), les lignes de transmission de signaux (6) étant disposées entre l'auxiliaire d'écoulement (9) et le matériau fibreux (2).

7. Agencement de mesure (1) selon l'une quelconque des revendications 2 à 4, comprenant en outre une construction sous vide (10) qui ferme hermétiquement l'agencement de mesure (1), les lignes de transmission de signaux (6) étant disposées entre la construction sous vide (10) et le matériau fibreux (2).

8. Agencement de mesure (1) selon la revendication 7, dans lequel les lignes de transmission de signaux (6) sont disposées entre la construction sous vide (10) et un auxiliaire d'écoulement (9) reposant sur le matériau fibreux (2).

9. Agencement de mesure (1) selon la revendication 2 ou la revendication 3, dans lequel les lignes de transmission de signaux (6) sont intégrées dans le matériau fibreux (2).

10. Agencement de mesure (1) selon l'une quelconque des revendications 2 à 9, dans lequel les lignes de transmission de signaux (6) sont alignées le long d'une direction de propagation (11) du matériau matriciel (4).

11. Agencement de mesure (1) selon l'une quelconque des revendications 2 à 10, dans lequel les lignes de transmission de signaux (6) sont alignées le long d'une ligne sensiblement droite.

12. Agencement de mesure (1) selon l'une quelconque des revendications 2 à 9, dans lequel les lignes de transmission de signaux (6) sont alignées en méandres.

13. Agencement de mesure (1) selon l'une quelconque des revendications 2 à 12, dans lequel les paramètres de processus et de structure sont choisis dans le groupe comprenant un degré de durcissement du matériau matriciel (4), une position de front d'écoulement du matériau matriciel (4), des défauts du matériau fibreux (2) ou du matériau matriciel (4) et un endommagement du matériau fibreux (2) ou du matériau matriciel (4).

14. Agencement de mesure (1) selon l'une quelconque des revendications 2 à 13, dans lequel l'élément capteur électrique (5) comprend au moins trois lignes de transmission de signaux (6) qui sont torsadées ensemble.

15. Agencement de mesure (1) selon l'une quelconque des revendications 2 à 14, dans lequel les lignes de transmission de signaux (6) sont réalisées sous la forme de fils uniques isolés.

16. Agencement de mesure (1) selon l'une quelconque des revendications 2 à 15, dans lequel une pluralité d'éléments capteurs électriques (5) sont pourvus.

17. Utilisation de l'agencement de mesure (1) selon l'une quelconque des revendications 2 à 16 pour mesurer des paramètres de processus et de structure le long d'un trajet de mesure pendant la fabrication d'un composant composite fibreux (23) et/ou dans un composant composite fibreux fabriqué (23).
